# EUROPEAN PATENT APPLICATION

(11) **EP 0 859 499 A2**
(43) Date of publication of application: **19.08.1998**
(21) Application number: 98101283.4
(22) Date of filing: 26.01.1998
(51) Int. Cl.: H04M 1/274

(54) **Portable type electronic appliance and method for generating dialing tones**

(30) Priority: 12.02.1997 JP 27543/97
(71) Applicant: NEC CORPORATION, Tokyo (JP)
(72) Inventor: Amano, Hiroshi, Kakegawa-shi, Shizuoka (JP)
(74) Representative: VOSSIUS & PARTNER

(57) **Abstract**

While a speaker cover (15) is depressed against a telephone transmitter port (mouthpiece) (27) of a telephone transmitter/receiver (handset) (26) of a telephone set, when a speaker (14) is moved backwardly together with the speaker cover (15) along guide rails (16), force externally applied to this speaker (14) is sensed by a sensor unit (18), and a DTMF signal is transmitted from a DTMF signal transmitting unit (13) in response to the sensing result under control of a control unit (11). Then, this DTMF signal is transmitted as a dialing tone from the speaker (14) to the telephone transmitter port (27), so that the telephone set is automatically dialed.

## Description

The present invention is related to a portable type electronic appliance having an auto-dialing tone generating function, and also to an auto-dialing method, capable of generating multi-frequency signal tones to be transmitted to a telephone transmitter (mouthpiece of handset) of a telephone set so as to automatically dial this telephone set in an indirect manner.

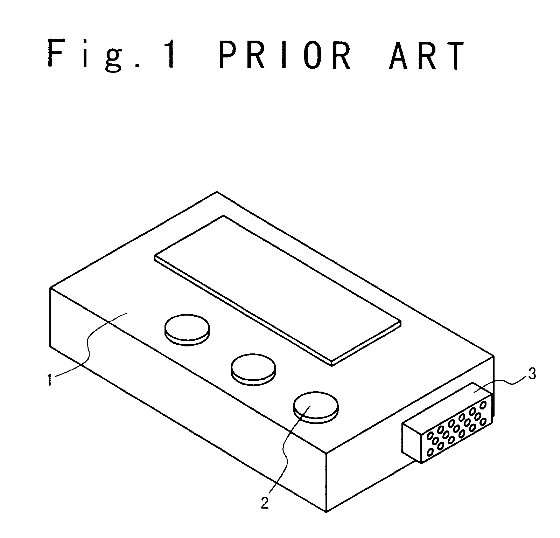

This sort of portable type electronic appliance is known in the field, and is typically shown in Fig. 1. As indicated in this drawing, a push button switch 2 directed to auto-dialing operation is provided on a main body 1. When a user may prepare a telephone conversation by using a telephone set (not shown), this user manipulates the push button switch 2 of this portable type electronic appliance. Thus, in this portable type electronic appliance, DTMF (Dual Tone Multi-Frequency) signal sounds functioning as multi-frequency signal tones for auto-dialing purposes are transmitted from a speaker 3.

As this portable type electronic appliance, for example, Japanese Laid-open Patent Disclosure JP-A-Heisei 3-6930 opened in 1991 discloses "RADIO PAGING RECEIVER EQUIPPED WITH MULTI-FREQUENCY SIGNAL TONE GENERATING FUNCTION". This radio paging receiver generates the DTMF signal tone corresponding to the telephone number of the communication counter party. The user depresses the button mounted on this radio paging receiver under such a condition that the acoustic sound generating unit of the radio paging receiver is positioned opposite to the telephone transmitter port (mouthpiece) of the telephone transmitter/receiver (handset) of the telephone set. As a consequence, the DTMF signal tone is produced, so that the paging signal is transmitted by the auto-dialing operation.

However, in the conventional portable type electronic appliance, the following problems frequently occur due to the manipulation aspect. That is, when the DTMF signal tones outputted from the portable type electronic appliance are received, these DTMF signal tones are dropped at the telephone transmitter port of the transmitter/receiver of the telephone set, or are erroneously received by the telephone transmitter port of the transmitter/receiver of the telephone set. For instance, in the case that the user uses this portable type electronic appliance, the user grips the telephone transmitter/receiver (handset) by his left hand, and closely touches the DTMF signal tone transmitting port (namely, front surface of cover of speaker 3) of the portable type electronic appliance gripped by his right hand on the telephone transmitter port of the telephone set. Under this condition, the user manipulates the push button switch 2 by his right hand. During this user manipulation, such a problem that the DTMF signal tone transmitting port is separated apart from the telephone transmitter port of the telephone transmitter/receiver may happen to occur. Thus, it is rather difficult to maintain the above-explained close touching condition between the DTMF signal tone transmitting port of the portable type electronic appliance and the telephone transmitter port of the telephone set. As a result, there is such a problem that a portion of the DTMF signal tones could not reach the telephone transmitter port. In addition, the error information would be transferred to the telephone transmitter port because of the externally supplied noise. As a result, the incorrect counter party would be mistakenly dialed, and/or the incorrect dialing operation would be carried out.

Also, as previously explained, since the user must manipulate the push button switch 2 in the tight attitude during the dialing operation, the operability of this portable type electronic appliance would be deteriorated.

Accordingly, an object of the present invention is to provide a portable type electronic appliance having an auto-dialing tone generating function, and also an auto-dialing method, capable of reducing dropping and erroneous transmissions of DTMF signal tones while using an auto-dialing function by multi-frequency signal tones, and further capable of improving reliability of the auto-dialing functions as well as operability thereof.

To achieve the above-described object, according to an aspect of the present invention, a portable type electronic appliance having an auto-dialing tone generating function is arranged by: an auto-dialing signal generating unit for generating a multi-frequency signal used for an auto-dialing operation; a speaker for converting the multi-frequency signal generated by the auto-dialing signal generating unit to an auto-dialing tone; a sensor for sensing that the speaker is moved in response to an external depression action; and a control unit for allowing the auto-dialing signal generating unit to generate the multi-frequency signal based on a sensing result of the sensor.

Furthermore, according to another aspect of the present invention, the above-described portable type electronic appliance is arranged by: an auto-dialing signal generating unit for generating a multi-frequency signal used for an auto-dialing operation; a speaker for converting the multi-frequency signal generated by the auto-dialing signal generating unit to an auto-dialing tone; a sensor for sensing that the speaker is externally depressed; and a control unit for allowing the auto-dialing signal generating unit to generate the multi-frequency signal based on a sensing result of the sensor.

Also, according to another aspect of the present invention, an auto-dialing method is composed of the steps of: sensing that a speaker cover for covering an opening plane of a speaker is depressed against a telephone transmitter port of a telephone transmitter/receiver of a telephone set; generating a multi-frequency signal for an auto-dialing operation based on the sensing result; converting the generated multi-frequency signal to an auto-dialing tone; and supplying the auto-dialing tone produced at the converting step to the telephone transmitter/receiver.

In accordance with the portable type electronic appliance of the present invention, the auto-dialing tones are produced based upon the multi-frequency signal only when the speaker is depressed against the telephone transmitter port of the telephone transmitter/receiver (handset) of the telephone set. As a consequence, to perform the auto-dialing operation, the user is required to depress the speaker of this portable type electronic appliance against the telephone transmitter port of the telephone transmitter/receiver of the telephone set by predetermined force. As a result, dropping and erroneous transmissions of the DTMF signal tones can be necessarily reduced during the auto-dialing operation.

A more complete understanding of the teachings of the present invention may be acquired by referring to the accompanying figures, in which like reference numbers indicate like features and wherein:
Fig. 1 is a perspective view for showing the outer appearance of the conventional portable type electronic appliance having the auto-dialing tone generating function;
Fig. 2 is a schematic block diagram for representing an overall system arrangement of a portable type electronic appliance having an auto-dialing tone generating function, according to an embodiment of the present invention;
Fig. 3 is a perspective view for showing an outer appearance of the portable type electronic appliance having the auto-dialing tone generating function of Fig. 2, a portion of which is cut away;
Fig. 4 is an explanatory diagram for explaining how to use the portable type electronic appliance having the auto-dialing tone generating function shown in Fig. 3;
Fig. 5 is a sectional view for representing a portion of a portable type electronic appliance having an auto-dialing tone generating function, according to another embodiment of the present invention; and
Fig. 6 schematically shows an arranging diagram of the portion of the portable type electronic appliance, as viewed from an inside of the housing of this portable type electronic appliance indicated in Fig. 5.

Referring now to drawings, various embodiments of the present invention will be described in detail.

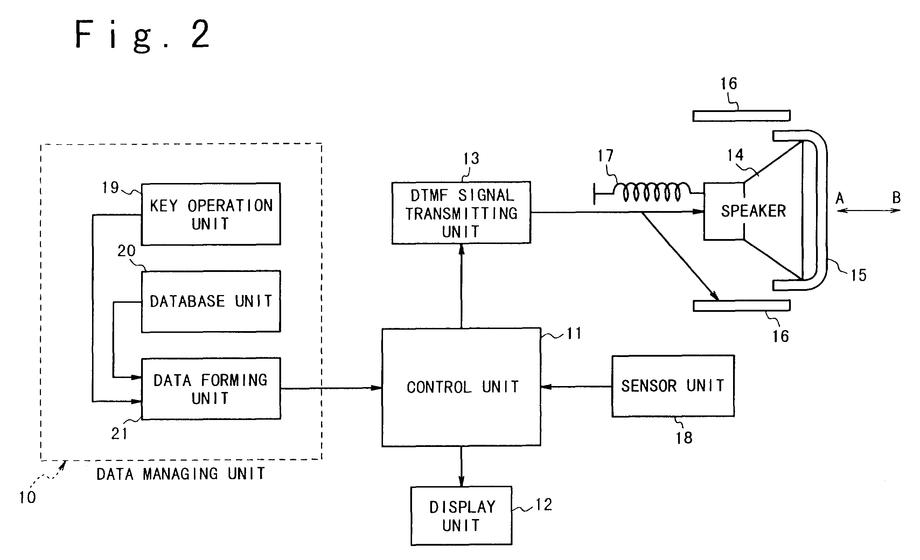

In Fig. 2, there is shown a system arrangement diagram of a portable type electronic appliance having an auto-dialing tone generating function, according to an embodiment of the present invention. This portable type electronic appliance is constituted by a data managing unit 10, a control unit 11, a display unit 12, a DTMF (Dual Tone Multi-Frequency) signal transmitting unit 13, a speaker 14, a speaker cover 15, a guide rail 16, a spring 17, and a sensor unit 18.

The data managing unit 10 manages data of telephone book, or telephone dictionary functioning as a source of DTMF signals to be transmitted. This data managing unit 10 is arranged by a key operation unit 19, a database unit 20, and a data forming unit 21. The key operation unit 19 owns a keyboard for receiving a key input made by a user. The database unit 20 previously stores telephone number data and the like. The data forming unit 21 forms data used to auto-dialing operation based on the data previously stored in the database unit 20, and the input data entered from the key operation unit 19.

The control unit 11 executes various sorts of control operations. The display unit 12 is employed so as to supply visual information to a user. The DTMF signal transmitting unit 13 transmits a DTMF signal in response to the data supplied from the data managing unit 10 under control of the control unit 11. The speaker cover 15 covers the speaker 14. The guide rail 16 is used to guide the speaker 14 together with the speaker cover 15 in a sliding manner to a forward/backward direction (namely, along directions indicated by arrows "A" and "B" in Fig. 2). The spring 17 energizes the speaker 14 together with the speaker cover 15 to the forward direction (namely, along direction indicated by arrow "B" of Fig. 2). The sensor unit 18 senses the movement of the speaker 14 and of the speaker cover 15 to the backward direction (namely, along direction indicated by arrow "A" of Fig. 2). As a sensor useable in this sensor unit 18, for instance, a position sensor for detecting a present position of the speaker 14, and a pressure sensor for detecting pressure applied to the speaker 14 may be employed.

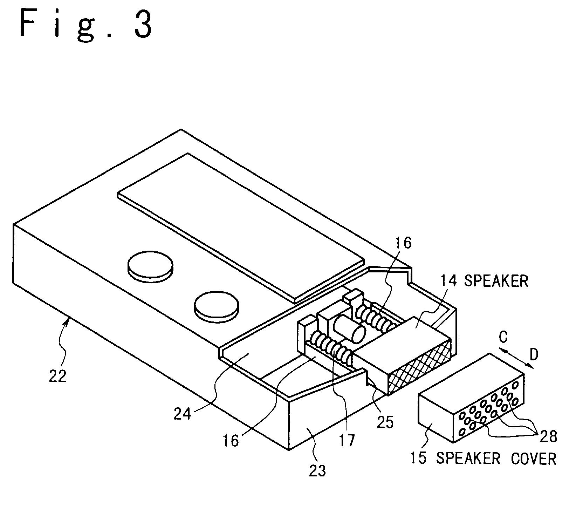

Fig. 3 schematically indicates a concrete structure of the above-described portable type electronic appliance with employment of the system arrangement shown in Fig. 2. In this Fig. 3, in order to clearly indicate a structure of a peripheral portion of the speaker 14, a portion of a housing 22 is cut away, and the speaker cover 15 is separated from the speaker 14. In this embodiment, the speaker 14 is made in a hexahedron shape, and the speaker cover 15 is made in a box shape.

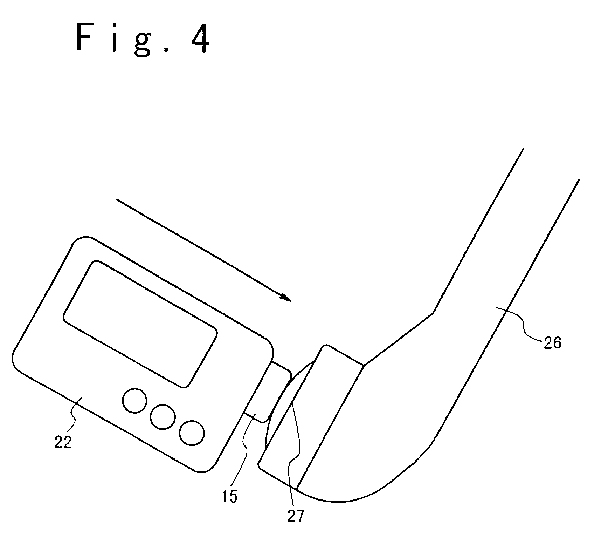

Two sets of guide rails 16 are provided in such a manner that these guide rails are positioned between a front wall 23 of the housing 22 and an inner partitioning wall 24 in parallel manner. The speaker 14 can be slide in combination with the speaker cover 15 along two sets of these guide rails 16 in inside/outside directions (namely, direction indicated by arrow C and direction indicated by arrow D of Fig. 3) of the housing 22. Then, the speaker 14 is energized by employing two sets of springs 17 provided inside the housing 22 in combination with the speaker cover 15 to the outer direction (namely, direction indicated by arrow D) of the housing 22. As a result, under normal condition, the front surface and the side surfaces of the speaker 14 are covered by the speaker cover 15 under such a condition that a portion of this speaker 14 is projected from an opening portion 25 of the front wall 23, except for a rear surface of this speaker 14. Under this condition, as illustrated in Fig. 4, a user depresses the speaker cover 15 against a telephone transmitter port (mouthpiece) 27 of a telephone transmitter/receiver (handset) 26 of a telephone set. As a result, the speaker 14 is moved backwardly in combination with the speaker cover 15 along the guide rail 16 in the inside direction (direction indicated by arrow C in Fig. 3) of the housing 22, so that the external force applied to the speaker 14 may be detected by the sensor unit 18 (see Fig. 2).

A large number of small holes 28 are formed in the front wall of the speaker cover 15 in order that sounds produced from the speaker 14 may pass through these small holes 28 of this speaker cover 15. It should be noted that the speaker cover 15 is manufactured by the same material of the housing 22, or a material substantially harder than this material of the housing 22. Alternatively, for example, the speaker cover 15 may be manufactured by employing such elastic materials as rubber and elastomer. Also, the spring 17 is normally made of a metal. Alternatively, this spring 17 may be manufactured by using a non-metal elastic material having elastic force similar to that of a metal, for example, rubber and elastomer.

Subsequently, operation of the portable type electronic appliance according to the above-described embodiment will now be described. First, the operation mode of this portable type electronic appliance is set to the DTMF signal transmitting mode by manipulating the key operation unit 19 shown in Fig. 2. Thereafter, the data forming unit 21 forms the data used to produce the DTMF signal based upon the data inputted from the key operation unit 19 and/or the data stored in the database unit 20.

The control unit 11 confirms the completion of the generation of the DTMF signal producing data, and thereafter acquires pressure value corresponding to external force applied to the speaker 14 from the sensor unit 18. Then, when the acquired pressure value is larger than a preselected pressure value, the control unit 11 judges such a condition that the speaker 14 is closely touched on the telephone transmitter part 27 of the telephone transmitter/receiver 26 of the telephone set. In this case, the control unit 11 causes the DTMF signal transmitting unit 13 to transmit the DTMF signal in accordance with the DTMF signal forming data. The transmitted DTMF signal is converted into the tones, or audible sounds by the speaker 14, and then the tones are transmitted, or supplied to the telephone transmitter port 27 of the telephone transmitter/receiver 26 of the telephone set. Upon receipt of the tones, the telephone set performs the auto-dialing operation. On the other hand, when the acquired pressure value is smaller than, or equal to the preselected pressure value, the control unit 11 judges that this portable type electronic appliance is brought into the DTMF signal-not-transmittable condition. In this case, the control unit 11 continuously tries to acquire the pressure value corresponding to the external force applied to the speaker 14 from the sensor unit 18 until the acquired pressure value exceeds the preselected value. It should also be noted that as the sensor unit 18, another switch may be employed which is operable in such a manner that this switch is turned on when the speaker 14 is moved backwardly over a distance longer than a predetermined distance to the inside direction of the housing 22.

Also, the control unit 11 continuously acquires the pressure value corresponding to the external force from the sensor unit 18 while the DTMF signal is transmitted from the DTMF signal transmitting unit 13 so as to check whether or not this pressure value becomes smaller than, or equal to the above-described preselected pressure value. Then, when the control unit 11 judges that the pressure value corresponding to the external force becomes smaller than, or equal to this preselected pressure value, the control unit 11 causes the DTMF signal transmitting unit 13 to stop the transmission of this DTMF signal. As a result, since the DTMF signal tones are produced only while the speaker 14 is closely touched on the telephone transmitter port 27 of the telephone transmitter/receiver 26 of the telephone set, the auto-dialing operation by the telephone set can be surely executed by this portable type electronic appliance.

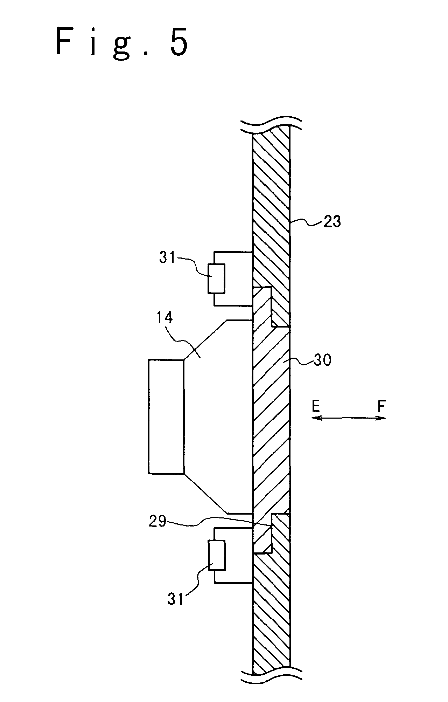

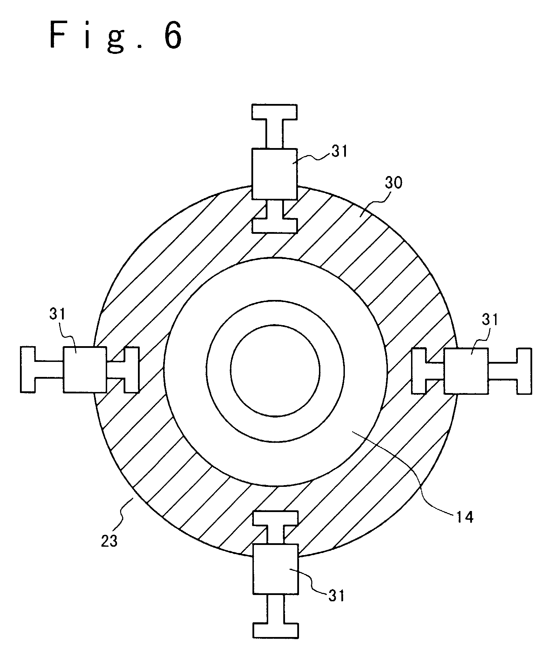

Next, a portable type electronic appliance according to another embodiment of the present invention will now be explained with reference to Fig. 5 and Fig. 6.

In Fig. 5, a stepped portion 29 is formed on an inner peripheral edge of a circular-shaped hole in a front wall 23 of a housing of this portable type electronic appliance. A disk-shaped speaker cover 30 is fitted into this stepped portion 29. The speaker cover 30 is manufactured by such an elastic material as rubber and elastomer. Therefore, when this elastic speaker cover 30 is depressed to the outside direction of the housing, the elastic speaker cover 30 is deformed to the inside direction (namely, direction indicated by arrow "E" of Fig. 5), but is automatically restored which may constitute a portion of the front wall 23. The speaker 14 is held on an inner surface of such an elastic speaker cover 30 in such a manner that only an opening plane thereof is covered by the speaker cover 30. As a consequence, when the elastic speaker cover 30 is deformed to the inside direction (direction indicated by arrow "E" of Fig. 5) of the housing, the speaker 14 may be moved backwardly together with this speaker cover 30.

Also, as illustrated in Fig. 6, a plurality of distortion sensors 31 are arranged on the peripheral edge portion of the speaker cover 30 in such a manner that these distortion sensors 31 are located in a predetermined interval along the circumferential direction. To detect a very small deformation made in the peripheral edge portion of the speaker cover 30, each of the distortion sensors 31 is arranged as follows. That is, one terminal of each distortion sensor 31 is fixed on the inner surface of the speaker cover 30, and the other terminal thereof is fixed on the inner surface of the front wall 23 in such a manner that this distortion sensor may ride on this peripheral edge portion.

Since the portable type electronic appliance owns such a structure, when the speaker cover 3 is deformed to the inside direction by depressing the outer surface of the speaker cover 30 on the telephone transmitter port of the telephone transmitter/receiver of the telephone set, the very small deformation of the peripheral edge portion of this speaker cover 30 is detected by the distortion sensors 31. In accordance with this embodiment, since both the speaker cover 30 and the speaker 14 are not projected from the housing, the portable type electronic appliance can be made compact, and can have a good style. Moreover, since the spring 17 and the guide rail 16 employed in the first-mentioned portable type electronic appliance as shown in Fig. 2 and Fig. 3 are no longer required, a total number of structural components of the second-mentioned portable type electronic appliance can be reduced.

As previously described in detail, in accordance with the portable type electronic appliances of the present invention, when the speaker cover is not depressed on the telephone transmitter port of the telephone transmitter/receiver of the telephone set, no multi-frequency tones for the auto-dialing operation are produced. As a result, the speaker can be necessarily and closely held on the transmitter port. As a consequence, the multi-frequency signal tones are not leaked outside the telephone transmitter port, but also these multi-frequency signal tones are not adversely influenced by the externally applied noise. As a result, dropping and erroneous transmissions of these multi-frequency signal tones can be reduced, so that reliability of the auto-dialing function can be improved.

Also, the multi-frequency signal tones are automatically transmitted by detecting such a condition that the speaker cover is moved backwardly when this speaker cover is depressed on the telephone transmitter port of the telephone transmitter/speaker of the telephone set by using the sensor. Therefore, such a cumbersome operation required in the conventional portable type electronic appliance, in which while the speaker cover is depressed on the telephone transmitter port, the push button is further manipulated, can be avoided, resulting in improvements of the operability of the portable type electronic appliance according to the present invention.

In the case that a portion of the wall of the housing is constituted by the elastic speaker cover and also the deformation of this elastic speaker cover is sensed by the sensor, since both the speaker cover and the speaker are not projected outside the housing, the more compact portable type electronic appliance can be made with the good style, and a total quantity of structural components thereof can be reduced.

## Claims

1. A portable type electronic appliance having an auto-dialing tone generating function, comprising:
an auto-dialing signal generating unit (13) for generating a multi-frequency signal used for an auto-dialing operation;
a speaker (14) for converting the multi-frequency signal generated by said auto-dialing signal generating unit (13) to an auto-dialing tone;
a sensor (18,31) for sensing that said speaker (14) is externally depressed; and
a control unit (11) for allowing said auto-dialing signal generating unit (13) to generate said multi-frequency signal based on a sensing result of said sensor.

2. A portable type electronic appliance according to claim 1, further comprising:
a speaker cover (15) for covering at least a portion of an opening plane of said speaker (14);
a guide rail section (16) for guiding said speaker (14) and said speaker cover (15) to an inside direction of a housing (22) of said portable type electronic appliance and an outside direction of said housing (22); and
an energizing unit (17) for energizing said speaker (14) and said speaker cover (15) along said guide rail section (16) to the outside direction of said housing (22), whereby said speaker (14) and said speaker cover (15) are fixedly located under a condition that said speaker (14) and said speaker cover (15) are projected outside said housing (22);
wherein said sensor (18) senses that said speaker (14) and said speaker cover (15) are moved along said guide rail section (16) to an inside direction of said housing (22) in response to externally applied depression force.

3. A portable type electronic appliance according to claim 1, further comprising:
a speaker cover (15) for covering at least a portion of an opening plane of said speaker (14);
a guide rail section (16) for guiding said speaker (14) and said speaker cover (15) to an inside direction of a housing (22) of said portable type electronic appliance and an outside direction of said housing (22); and
an energizing unit (17) for energizing said speaker (14) and said speaker cover (15) along said guide rail section (16) to the outside direction of said housing (22), whereby said speaker (14) and said speaker cover (15) are fixedly located under a condition that said speaker (14) and said speaker cover (15) are projected outside said housing (22);
wherein said sensor (18) senses that said speaker cover (15) is externally depressed along said guide rail section (16) to an inside direction of said housing (22) in response to externally applied depression force.

4. A portable type electronic appliance according to claim 2 or claim 3,
wherein at least a portion of the opening plane of said speaker (14) and a side surface thereof are covered with said speaker cover (15).

5. A portable type electronic appliance according to claim 1, further comprising:
a speaker cover (30) for covering the opening plane of said speaker (14), and said speaker cover (30) is made of an elastic material, and said speaker cover (30) is moved and deformed to an inside direction of said housing of said portable type electronic appliance when depression force is externally applied to said speaker cover (30) and is restored with the own elasticity of said speaker cover (15) when said externally applied depression force is removed;
wherein said sensor (31) comprises a distortion sensor for sensing the movement and the deformation of said speaker cover (30).

6. A portable type electronic appliance according to claim 5,
wherein said speaker cover (30) constitutes a portion of a wall (23) of said housing (22).

7. An auto-dialing method comprising the steps of:
sensing that a speaker cover (15,30) for covering an opening plane of a speaker (14) is depressed against a telephone transmitter port (27) of a telephone transmitter/receiver (26) of a telephone set;
generating a multi-frequency signal for an auto-dialing operation based on the sensing result;
converting said generated multi-frequency signal to an auto-dialing tone; and
supplying the auto-dialing tone produced at said converting step to the telephone transmitter port (27).

8. An auto-dialing method according to claim 7,
wherein said sensing step senses that said speaker (14) and said speaker cover (15) are moved by depressing said speaker cover (15) against the telephone transmitter port (27) of the telephone transmitter/receiver (26) of said speaker cover.

9. An auto-dialing method according to claim 7,
wherein said sensing step senses that said speaker cover (30) is moved and deformed backwardly by depressing said speaker cover (30) against the telephone transmitter port (27) of the telephone transmitter/receiver (26) of said telephone set.
